# EUROPEAN PATENT APPLICATION

(11) **EP 4 675 069 A1**
(43) Date of publication of application: **07.01.2026**
(21) Application number: 24186839.7
(22) Date of filing: 05.07.2024
(51) Int. Cl.: E05D 3/02, E05D 3/12, E05D 7/02, E05D 7/10, E05D 11/06, E05D 11/10, E05D 15/48, E05D 15/58

(54) **PARTITION WALL SECTION HINGE**

(71) Applicant: Forankra AB, 447 23 Vårgårda (SE)
(72) Inventor: ANDREASSON, Gusten, 447 23 Vårgårda (SE)
(74) Representative: Lind Edlund Kenamets Intellectual Property AB

(57) **Abstract**

A wall section hinge comprising first and second hinge brackets intended to be mounted on a first and second wall sections, each hinge bracket comprising a cylindrical hinge bracket sleeve with an insertion end, and a generally U-shaped hinge fork having an elongated web portion provided in each end with a pair of parallel legs, each leg pair including an outer leg and an inner leg. The outer leg of one leg pair is inserted into one hinge bracket sleeve, thereby providing a rotatable connection between the hinge fork and this hinge bracket. The inner leg of the other leg pair is inserted into the other hinge bracket sleeve, whereby an outer part of the hinge fork prevents rotational movement between the hinge fork and the other bracket.

## Description

### Field of the invention

The present disclosure relates to a hinge for wall sections of a partition wall for a cargo space interior.

### Background of the invention

It is often desirable to partition a cargo space into several subdivisions, e.g., in order to keep different types of cargo in separate partitions having different conditions. In particular, partition walls may be used to separate a refrigerated cargo space from a non-refrigerated space.

Some partition walls include a plurality of partition wall sections, where each section is fitted between a floor and a ceiling of a cargo space. Such partition wall sections may be fitted at almost any position in the cargo space, thereby allowing full flexibility when partitioning the cargo space. One example of such flexible partition wall sections (not limiting to the present invention) is provided by document EP 4 015 306.

Despite the flexibility of such partition walls, there exists a desire for further versatility, and e.g., have a closed partition with an openable door. For this reason, there are specifically designed partition walls that are provided with an integrated door. However, such wall sections tend to become heavy and bulky. Also, the door cannot be easily moved, making the partition wall less flexible.

Consequently, there still exists a need for even more flexible partition walls, allowing the formation of a closed partition of the cargo space which is easily accessible.

### Summary of the invention

In light of the above, it is an object of the present invention to further improve the flexibility of a cargo space partition wall. Specifically, aspects of the present invention provide a partition wall hinge allowing a hinged connection of one partition wall section to another.

According to a first aspect of the present invention, there is provided a wall section hinge comprising a first hinge bracket intended to be mounted on a first partition wall section, the first hinge bracket comprising a first cylindrical hinge bracket sleeve having a first insertion end, a second hinge bracket intended to be mounted on a second partition wall section, adjacent to the first partition wall section, the second hinge bracket comprising a second cylindrical hinge bracket sleeve having a second insertion end, and a generally U-shaped hinge fork having an elongated web portion provided in a first end with a first pair of parallel legs and in a second end with a second pair of parallel legs, each leg pair including an outer leg and an inner leg. The outer leg of the first leg pair is inserted into the insertion end of the first hinge bracket sleeve, thereby providing a rotatable connection between the hinge fork and the first hinge bracket, and wherein the inner leg of the second leg pair is inserted into the insertion end of the second hinge bracket sleeve, whereby an outer part of the hinge fork abuts the second bracket and prevents rotational movement between the hinge fork and the second bracket (in at least one direction).

As used herein, the "inner" leg is located closer to the center of the hinge, while the "outer" leg is located more remotely, closer to the edge of the hinge.

According to this aspect, the outer leg of one leg pair is inserted into one hinge bracket sleeve, thereby providing a rotatable connection between the hinge fork and this hinge bracket. The inner leg of the other leg pair is inserted into the other hinge bracket sleeve, whereby an outer part of the hinge fork prevents rotational movement between the hinge fork and the other bracket.

When the hinge is mounted on two partition wall sections, the sections will be hingedly connected with respect to each other. The first wall section, where the outer leg is inserted into the first hinge bracket sleeve, will be rotationally connected to the hinge fork. The second wall section, where the inner leg is inserted into the second hinge bracket sleeve, will be rotationally fixed with respect to the hinge fork. This allows the second partition wall section to be rotated around an axis of rotation coinciding with the outer leg, so as to be completely moved out of its position to leave an opening with a width corresponding to a full wall section.

The U-shaped hinge fork may be removed and replaced such that the outer leg of the second leg pair is inserted into the second hinge bracket sleeve, and the inner leg of the first leg pair is inserted into the first hinge bracket sleeve. This allows the first partition wall section to be completely moved out of its position to leave an opening with a width corresponding to a full wall section.

In other words, the positioning of the hinge bridge determines which of the two wall sections that can be completely opened.

The hinge is easy to retro-fit to existing partition wall sections, by simply attaching one hinge bracket to each section, adequately spaced apart to allow insertion of the hinge bridge.

In some embodiment, an inner part of the hinge fork abuts the second bracket and prevents rotational movement between the hinge fork and the second bracket (also in the other direction).

The outer part may be the outer leg of the second leg pair. Alternatively, the web portion has such a shape that it forms the outer part. The web portion may also have such a shape that it forms the inner part.

In some embodiments, each hinge bracket comprises a generally flat mounting portion, on which the first and second hinge sleeve are attached. Each mounting portion has an abutment area which extends axially beyond the insertion end of the first and second hinge sleeve, respectively. This abutment portion may ethne be configured to abut the outer part and optionally the inner part to prevent rotation.

As the hinge bridge is freely movable in the vertical direction (axially along the leg sleeves) the hinge allows vertical movement of one section with respect to the other. This is advantageous when the partition wall sections are of the kind where each wall section is provided with wheels (or equivalent rolling means) which may brought into contact with the floor by moving the wall section in the vertical direction, thereby allowing the wall section to be rolled against the floor.

A second aspect of the invention relates to a partition wall comprising a first and a second wall section configured to be secured between a floor and a ceiling of a cargo space, each wall section including a plurality of rollers arranged along a lower edge of said wall section, a ceiling contacting portion arranged on an upper edge of the wall section, a floor contacting portion arranged on a lower edge of the wall section and displaceable between a contracted position, in which the wall section is rollable on the rollers, and an expanded position, in which the floor contacting portion projects beyond the rollers so that the wall section is supported by the floor contacting portion when in a substantially upright position, so that, when the wall section is arranged in a cargo space having a height corresponding to the height of wall section, and the floor contacting portion is brought into its expanded position, the ceiling contacting portion is brought into contact with the ceiling to secure the wall section, the wall section further comprising a hinge according to the first aspect of the invention, wherein the first hinge bracket is mounted on the first wall section and the second hinge bracket is mounted on the second wall section.

The displacement of the floor contacting portion has the dual purpose of preventing the wall from rolling on the wheels once the right position has been found, and to increase a total height of the wall panel. When the panel is in the correct place, the floor contacting portion is moved to its expanded position, in which it projects beyond the wheels. The panel now rests on the floor contacting portion, and the wheels will be brought out of contact with the floor. When the floor contact potion is moved to its contracted position, the wheels will again be brought into contact with the floor, and the wall may again be easily moved.

### Brief description of the drawings

The invention, some non-limiting embodiments and further advantages will now be further described with reference to the drawings.
Figures 1A-C illustrate how a first partition wall section is secured in a cargo space.
Figure 2A-C illustrate how a second partition wall is arranged next to the first partition wall and connected with hinges according to an embodiment of the invention.
Figure 3A shows a perspective an exploded view of a hinge according to an embodiment of the invention.
Figure 3B shows a top view of the hinge in figure 3A in assembled state.
Figure 4A-B illustrate how the second partition wall in figure 2c is released and opened.
Figure 5A-B are schematic top cross section views of two partition wall sections rotated with respect to each other.

### Detailed description of the drawings

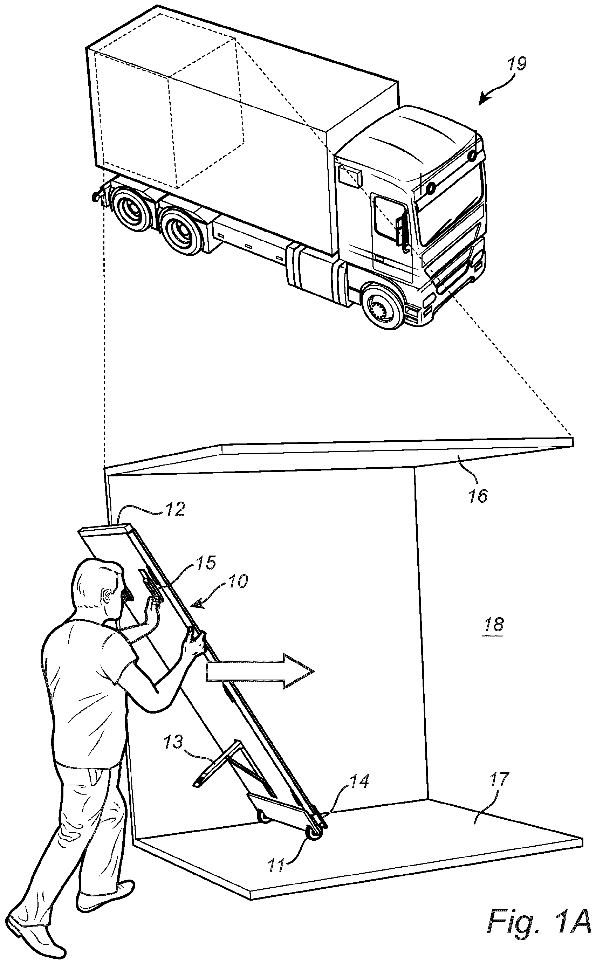

Figures 1A-C illustrate a flexible partition wall section 10 which can be positioned and secured between the ceiling 16 and the floor 17 of a cargo space 18 such as the inside of a truck 19. In the illustrated example, each partition wall section 10 has wheels or rollers 11 in its lower end and a ceiling contacting portion 12 in its upper end. The wall section 10 further has a maneuvering assembly 13 for controlling a displacement of a floor contacting portion 14. The floor contacting portion 14 is displaceable between a contracted position, in which the wall section 10 is rollable on the rollers 11, and an expanded position, in which the floor contacting portion 14 projects beyond the rollers 11 so that the wall section 10 is supported by the floor contacting portion when in a substantially upright position. In this position it is no longer rollable. Handles 15 are provided on the face of the wall section 10. The wall section 10 may of the type described in EP 4 015 306, hereby incorporated by reference.

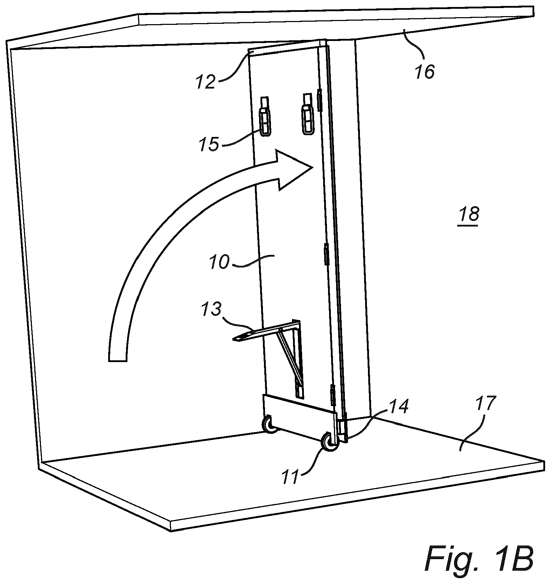

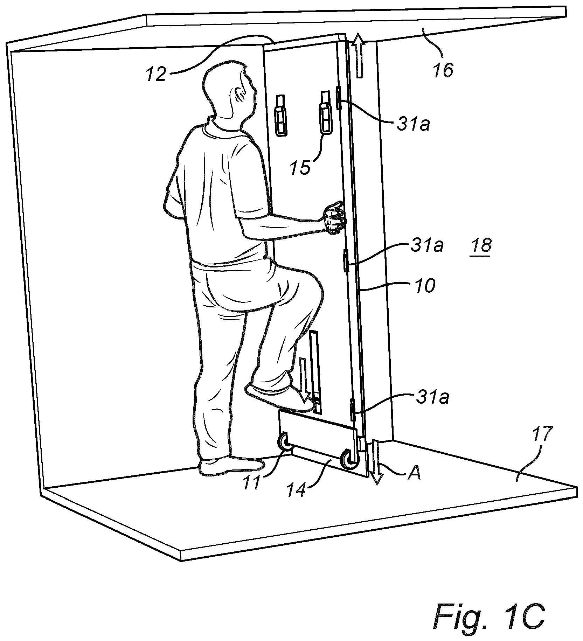

As illustrated in figure 1A, the partition wall section 10 may be easily rolled on its rollers 11 along the floor 17 into a desired position by an operator holding the wall section 10 by the handles 15. The wall section 10 may then be tilted to a substantially upright position, as illustrated in figure 1B. Finally, as shown in figure 1C, the foot operated maneuvering assembly 13 is used to push the floor contacting portion 14 downwards. When the floor contacting portion 14 projects past the rollers 11, the wall section 10 will be supported by the floor contacting portion 14 and will no longer be free to roll on the rollers 11. As the displacement of the floor contacting portion 14 continues downwards the distance between the floor contacting 14 portion and the ceiling contacting portion 12 - and thus the total height of the wall section 10 - increases. Eventually, the ceiling contacting portion 12 is brought into contact with the ceiling 16 of the cargo space 18, thereby clamping the wall section 10 tightly between the floor 17 and the ceiling 16.

In the illustrated example, the maneuvering assembly 13 is foot operated, which enables the operator to fixate the wall section 10 into place while still holding it with both hands. The operating lever of the assembly 13 is then pushed down with one foot to secure the wall section 10. To release the wall section, the operating handle is pulled up. Details of such a maneuvering assembly are discussed in EP 4 015 306.

Another example of a suitable maneuvering assembly is disclosed in EP 4 015 309. In this case, the operating lever of the maneuvering assembly is located slightly higher, so as to be operated by hand. Also, the operating lever is here lifted to secure the wall section, and pulled down to release it.

It is noted that the walls section 10 is provided with at least one, in the illustrated case three, hinge brackets 31. These will be discussed in more detail below.

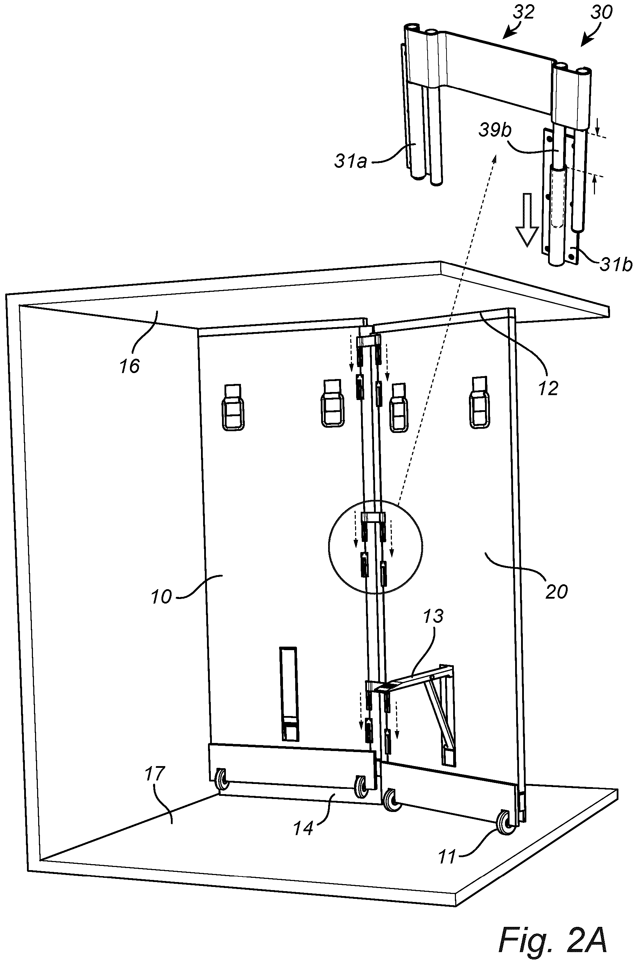

Turning to figure 2A-C, a second wall section 20 is arranged next to the first wall section 10 and connected to the first wall section by two partition wall hinges 30a.

In figure 2a, the second wall section 20 is placed in an upright position next to the first wall section. The wall section 20 has hinge brackets 31b mounted on the side next to the first wall section 10, and aligned in the vertical direction with the brackets 31a on the first wall section 10. A hinge fork 32 is inserted from above into each pair of brackets 31a, 31b, thereby forming three hinges 30.

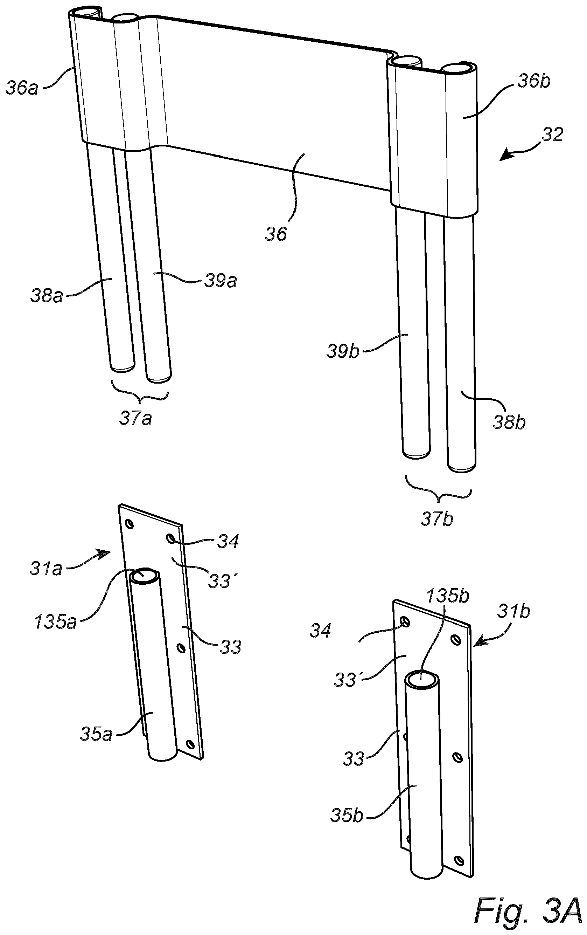

A hinge 30 is shown in more detail in figure 3A-B. As mentioned, it includes two hinge brackets 31a, 31b and a hinge fork 32. Each hinge bracket 31a, 31b has a generally flat mounting plate 33, configured to be mounted to a partition wall section 10. In the illustrated case, the mounting plate is provided with a set of holes 34 allowing the mounting plate to be mounted by appropriate screws (not shown). Each hinge bracket 31a, 31b further has a (circular) cylindrical hinge bracket sleeve 35a, 35b. Each sleeve 35a, 35b has an opening in an upper insertion end 135a, 135b. Various manufacturing processes are possible, but as an example, the sleeve 35a, 35b and plates 33 are formed separately, and then welded together. In the illustrated case, each mounting portion 33 has an abutment area 33' extending beyond (above) the respective hinge sleeve 35a, 35b.

The hinge fork 32 includes a web 36 which is provided with a pair of legs (or pins) 37a, 37b in each end 36a, 36b. Each leg pair 37a, 37b includes an outer leg 38a, 38b located closer to the end of the web 36, and an inner leg 39a, 39b located between the outer legs 38a, 38b. In the illustrated example, the web 36 is bent to such a shape that a section between the inner legs 38a, 38b extends in a plane parallel to the front surfaces 33a of the mounting plates 33 and in contact with these front surfaces 33a when the legs 37 of the fork 32 is inserted into the insertion ends 135a, 135b of the sleeves 35a, 35b.

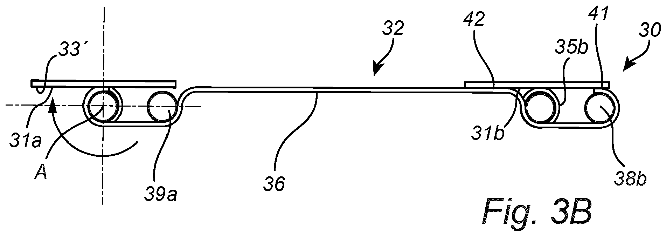

As shown in figure 3b, the hinge 30 is assembled such that the hinge fork 32 has an outer leg 38a (in one end of the web 36) inserted in the first hinge bracket sleeve 35a and an inner leg 39b (in the other end of the web 36) inserted into the second hinge bracket sleeve 35b. When assembled, the first hinge bracket 31a can therefore rotate with respect to the hinge fork 32 around the axis A of the first hinge bracket sleeve 34a/outer leg 38a, as indicated by arrow. At the same time, the second hinge bracket 31b cannot rotate with respect to the hinge fork 32. In one direction, rotation is prevented by an outer part 41 of the hinge bracket 31b, in this case the outer leg 38b. In the other direction, rotation is prevented by an inner part 42 of the hinge bracket 31b, in this a part of the web 36. In the illustrated example, the inner and outer parts 41, 42 abut the abutment area 33' of the mounting portion 33 of the second hinge bracket 31b to prevent rotation.

Returning to figure 2A, as the second wall section 20 is still resting on its rollers 11, it is positioned slightly lower than the wall section 10. As shown in the enlargement, this means that the hinge brackets 31b are located slightly lower than the brackets 31a, and leg 39b of the hinge fork 32 is only partially inserted into the sleeve 35b.

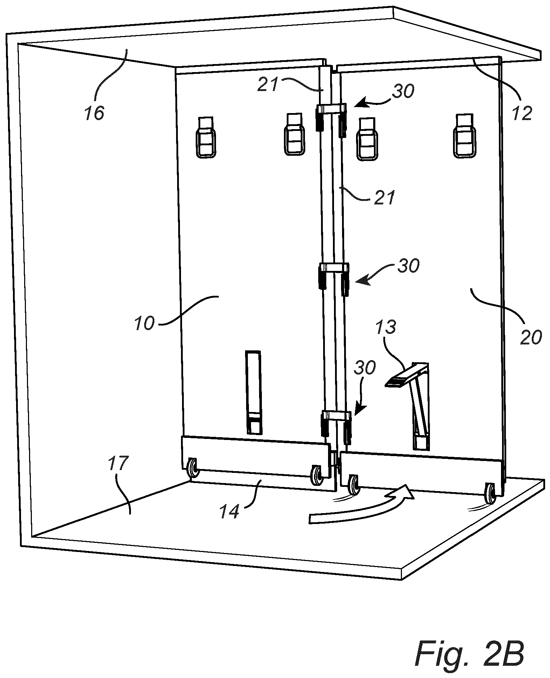

As shown in figure 2B, the hinges 30 allow the second wall section 20 to be swung into a position where it is aligned (here parallel) with the first wall section 10. Sealing edges 21, such as an extruded rubber profile, are provided on the sides of each wall section 10, 20, in order to effectively seal the partition behind the wall sections 10, 20.

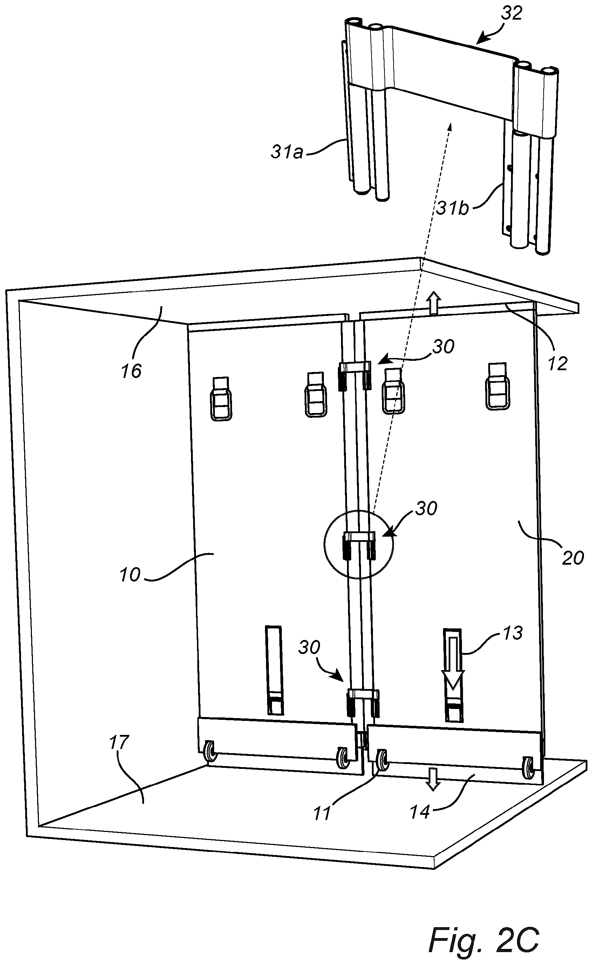

In figure 2C, the second wall section 20 is secured by operating the maneuvering assembly 14. The wall section 20 is thereby pushed upwards, and clamped between the ceiling 16 and floor 17 in the same manner as the first wall section. As shown in the enlargement, after this operation the brackets 31 and 31b are fully aligned in the vertical direction.

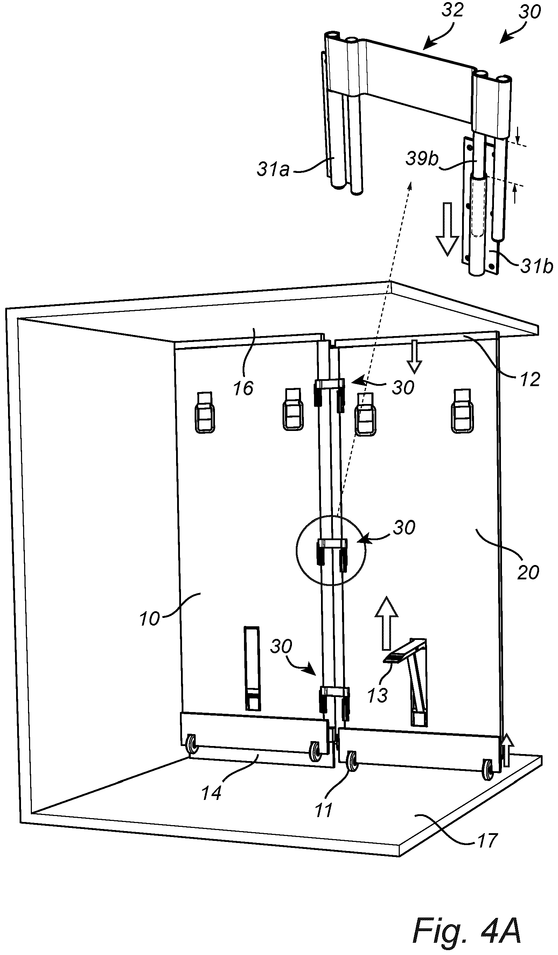

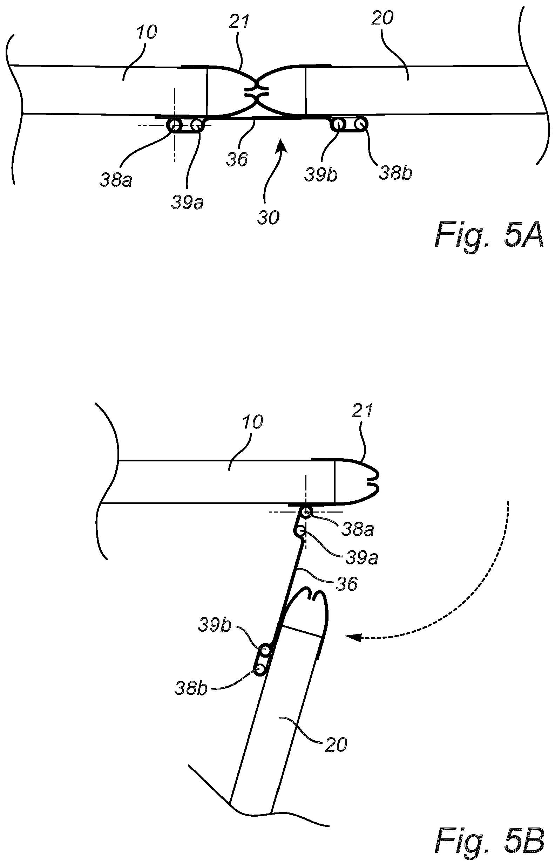

With reference to figures 4A-4B and 5A-5B, it will be described how the hinges 30 allow the second wall section 20 to be opened as a door.

First, in figure 4A, the maneuvering assembly 13 is lifted, thereby retracting the floor supporting portion 14. As a consequence, the wall section is lowered so that the ceiling contacting portion 12 is separated from the ceiling. The wall section 20 is now released and rests on the rollers 11. As shown in the enlargement, the bracket 31b is again lower than the bracket 31a, but leg 39b of the hinge fork 32 still remains partially inserted into the sleeve 35b. Figure 5A schematically illustrates how the hinge 30 connects the wall sections 10, 20 when they are aligned as in figure 4A.

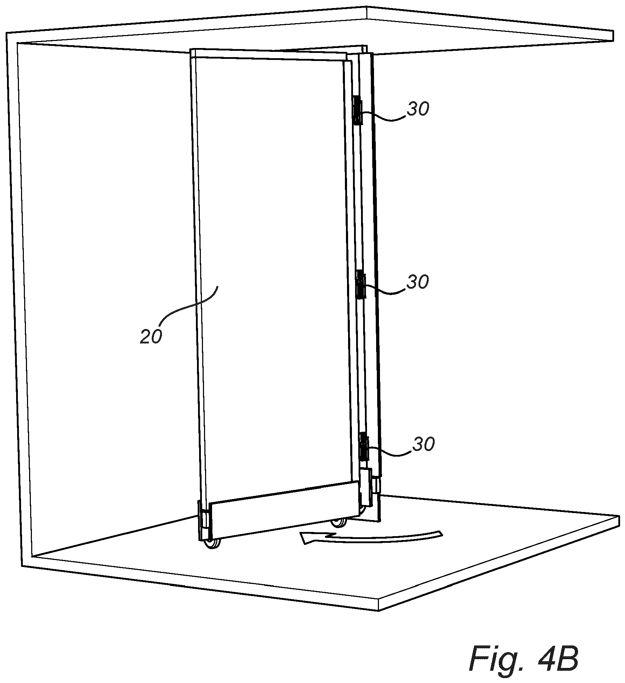

When the second wall section 20 has been released from the ceiling, it may be rolled on the rollers 11. As shown in figure 5B, the hinge 30 allows rotation around the leg 38a of the hinge fork 32, so that the wall section 20 can be swung open, as shown in figure 4B. As the axis of rotation A is located a distance inside the outer edge of the first all section 10, the second wall section 20 maybe swung completely out of the opening formed where the second wall section 20 was previously secured.

The person skilled in the art realizes that the present invention by no means is limited to the embodiments described above. The features of the described embodiments may be combined in different ways, and many modifications and variations are possible within the scope of the appended claims. For example, the shape and design of the brackets and hinge fork may be different, while still providing the same functionality.

## Claims

1. A wall section hinge (30), comprising:
a first hinge bracket (31a), intended to be mounted on a first partition wall section (10), said first hinge bracket comprising a first cylindrical hinge bracket sleeve (35a) having a first insertion end (135a),
a second hinge bracket (31b), intended to be mounted on a second partition wall section (20), adjacent to said first partition wall section (10), said second hinge bracket comprising a second cylindrical hinge bracket sleeve (35b) having a second insertion end (135b),
a generally U-shaped hinge fork (32) having an elongated web portion (36), said web portion being provided in a first end (36a) with a first pair (37a) of parallel legs (38a, 39b) and in a second end (36b) with a second pair (37b) of parallel legs (38b, 39b), each leg pair (37a, 37b) including an outer leg (38a, 38b) and an inner leg (39a, 39b),
wherein the outer leg (38a) of the first leg pair (37a) is inserted into the insertion end (135a) of the first hinge bracket sleeve (35a), thereby providing a rotatable connection between the hinge fork (32) and the first hinge bracket (31a), and
wherein the inner leg (39b) of the second leg pair (37b) is inserted into the insertion end (135b) of the second hinge bracket sleeve (35b), whereby an outer part (41) of the hinge fork (32) abuts the second bracket (31b) and prevents rotational movement between the hinge fork (32) and the second bracket.

2. The hinge (30) according to claim 1, wherein an inner part (42) of the hinge fork (32) abuts the second bracket (31b) and prevents rotational movement between the hinge fork (32) and the second bracket.

3. The hinge according to claim 2, wherein the web portion (36) has such a shape that it forms the inner part (42).

4. The hinge (30) according to one of claims 1-3, wherein the outer part (41) is the outer leg (38b) of the second leg pair (37b).

5. The hinge according to one of claims 1-3, wherein the web portion (36) has such a shape that it forms the outer part (41).

6. The hinge (30) according to any one of the preceding claims,
wherein each hinge bracket (31a, 31b) comprises a generally flat mounting portion (33) on which the first and second hinge sleeves (35a, 35b) are attached, such that the mounting portion (33) has an abutment area (33') which extends axially beyond the insertion end (135a, 135b) of the first and second hinge sleeve, respectively, and
wherein said abutment portion (33') is configured to abut said outer part and optionally said inner part.

7. The hinge (30) according to any one of the preceding claims, where the legs (38a, 29b) inserted into the bracket sleeves (35a, 35b) are free to slide along the sleeves.

8. The hinge (30) according to claim 7, intended to be fitted between first and second wall sections (10, 20) which are configured to be secured between a floor (16) and a ceiling (17) of a cargo space (18), each wall section (10, 20) comprising:
a plurality of rollers (11) arranged along a lower edge of said wall section (10, 20),
a ceiling contacting portion (12) arranged on an upper edge of the wall section (10, 20),
a floor contacting portion (14) arranged on a lower edge of the wall section (10, 20) and displaceable between a contracted position, in which the wall section (10, 20) is rollable on the rollers (11), and an expanded position, in which the floor contacting portion (14) projects beyond the rollers (11) so that the wall section (1'0, 20) is supported by the floor contacting portion (14) when in a substantially upright position,
so that, when the wall section (10, 20) is arranged in a cargo space (18) having a height corresponding to the height of wall section (10, 20), and the floor contacting portion (20) is brought into its expanded position, the ceiling contacting portion (12) is brought into contact with the ceiling (17) to secure the wall section (10, 20).

9. A partition wall comprising a first and a second wall section (10, 20) configured to be secured between a floor (16) and a ceiling (17) of a cargo space (18), each wall section (10, 20) including:
a plurality of rollers (11) arranged along a lower edge of said wall section (10, 20),
a ceiling contacting portion (12) arranged on an upper edge of the wall section (10, 20),
a floor contacting portion (14) arranged on a lower edge of the wall section (10, 20) and displaceable between a contracted position, in which the wall section (10, 20) is rollable on the rollers (11), and an expanded position, in which the floor contacting portion (14) projects beyond the rollers (11) so that the wall section (10, 20) is supported by the floor contacting portion (14) when in a substantially upright position,
so that, when the wall section (10, 20) is arranged in a cargo space (18) having a height corresponding to the height of wall section (10, 20), and the floor contacting portion (20) is brought into its expanded position, the ceiling contacting portion (12) is brought into contact with the ceiling (17) to secure the wall section (10, 20),
the wall section further comprising a hinge according to one of claim 1-7, wherein the first hinge bracket (31a) is mounted on the first wall section (10) and the second hinge bracket (31b) is mounted on the second wall section (20).

10. The partition wall according to claim 9, further comprising a maneuvering assembly (13) configured to control the displacement of the floor contacting portion (14).
